(19) 

**Europäisches Patentamt**
**European Patent Office**
**Office européen des brevets**

(11) **EP 3 110 151 A1**

(12) **EUROPEAN PATENT APPLICATION**
published in accordance with Art. 153(4) EPC

(43) Date of publication:
28.12.2016 Bulletin 2016/52

(51) Int Cl.:
*H04N 13/00* (2006.01)       *H04N 19/597* (2014.01)
*H04N 19/176* (2014.01)

(21) Application number: 15765620.8

(22) Date of filing: 18.03.2015

(86) International application number:
**PCT/CN2015/074487**

(87) International publication number:
**WO 2015/139634 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **21.03.2014 CN 201410109537**

(71) Applicant: **Huawei Technologies Co., Ltd.**
**Longgang**
**Shenzhen, Guangdong 518129 (CN)**

(72) Inventor: **CHEN, Xu**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **ENCODING/DECODING PROCESSING METHOD AND DEVICE FOR IMAGE SEGMENTATION MANNER**

(57)    Embodiments of the present invention provide an encoding/decoding processing method and apparatus for an image segmentation manner, where the encoding processing method for an image segmentation manner includes: obtaining a size of a to-be-encoded image block and a serial number value of a used segmentation manner in a depth modeling mode DMM1 encoding process; obtaining an initial value value corresponding to the size of the image block, and obtaining, through calculation, an absolute value of a difference between the initial value value and the serial number value of the segmentation manner, where $value = k - 2^{a-x}$, x is a quantity of bits that need to be saved, k is a quantity of all segmentation manners corresponding to the size of the image block, and a is a quantity of bits required for representing all the segmentation manners; and encoding the absolute value by using a-x bits, to obtain encoding information of the segmentation manner of the image block.

FIG. 1

EP 3 110 151 A1

## Description

## TECHNICAL FIELD

Embodiments of the present invention relate to image processing technologies, and in particular, to an encoding/decoding processing method and apparatus for an image segmentation manner.

## BACKGROUND

In three-dimensional (3D) video encoding/decoding, a depth image needs to be encoded or decoded, to reflect depth information of an object. The depth image has features of a clear edge (object edge) and similar area block depth values. Therefore, a depth modeling mode (Depth modeling modes, hereinafter referred to as DMM) image block segmentation method is added compared with traditional texture image encoding/decoding. A DMM1 is performing segmentation encoding/decoding on an image block in a wedge manner. During specific segmentation, there may be different segmentation manners for image blocks of different sizes, for example, it is assumed that there are 87 segmentation manners for a 4x4 image block. When a depth image block is encoded, for representing which segmentation manner in the DMM1 is used for the image block, a segmentation manner needs to be identified in binary.

In the prior art, fixed-length code is used for encoding a segmentation manner in a DMM1. For example, for 87 possible segmentation manners of a 4x4 image block, an encoder uses 7 bits ($2^7=128>87$) to represent a segmentation manner used by the encoder. However, actually, 41 of 128 cases represented by the 7 bits are redundant, and therefore, encoding efficiency is low.

## SUMMARY

Embodiments of the present invention provide an encoding/decoding processing method and apparatus for an image segmentation manner.

According to a first aspect, an encoding processing method for an image segmentation manner is provided, including:

obtaining a size of a to-be-encoded image block and a serial number value of a used segmentation manner in a depth modeling mode DMM1 encoding process;

obtaining an initial value value corresponding to the size of the image block, and obtaining, through calculation, an absolute value of a difference between the initial value value and the serial number value of the segmentation manner, where $value=k-2^{a-x}$, x is a quantity of bits that need to be saved, k is a quantity of all segmentation manners corresponding to the size of the image block, and a is a quantity of bits required for representing all the segmentation manners; and

encoding the absolute value, to obtain encoding information of the segmentation manner of the image block.

With reference to the first aspect, in a first possible implementation manner of the first aspect, the encoding the absolute value by using a-x bits includes: if the absolute value is greater than the initial value value, encoding the absolute value by using the a-x bits; or if the absolute value is less than or equal to the initial value value, encoding the absolute value by using the a-x bits and one sign bit, where if the absolute value is less than the serial number value of the segmentation manner, the sign bit is a first identifier, or if the absolute value is greater than the serial number value of the segmentation manner, the sign bit is a second identifier.

With reference to the first aspect and the foregoing implementation manner, in a second possible implementation manner, the obtaining an initial value value corresponding to the size of the image block includes: obtaining, through calculation by using the quantity x of bits that need to be saved, the quantity k of all segmentation manners corresponding to the size of the image block, and the quantity a of bits required for representing all the segmentation manners, the initial value value corresponding to the size of the image block; or querying a preset correspondence between a size of an image block and an initial value value, to obtain the initial value value corresponding to the size of the image block.

With reference to the first aspect and the foregoing implementation manners, in a third possible implementation manner, the size of the image block is 4x4, and the quantity x of bits that need to be saved is 1; or the size of the image block is 8x8, and the quantity x of bits that need to be saved is 1; or the size of the image block is $16\times16$, and the quantity x of bits that need to be saved is 1; or the size of the image block is 32x32, and the quantity x of bits that need to be saved is 1.

According to a second aspect, a decoding processing method for an image segmentation manner is provided, including:

decoding encoding information of a segmentation manner of an image block in a depth modeling mode DMM1 decoding process, to obtain a decoding value;

obtaining an initial value value corresponding to a size of the image block, where $value=k-2^{a-x}$, x is a quantity of bits that need to be saved, k is a quantity of all segmentation manners corresponding to the size of the image block, and a is a quantity of bits required for representing all the segmentation manners; and

obtaining, according to the decoding value and the initial value value, a serial number value of the segmentation manner used for the image block.

With reference to the second aspect, in a first possible implementation manner of the second aspect, the decoding encoding information of a segmentation manner of an image block, to obtain a decoding value includes: decoding a-x bits of the encoding information of the segmentation manner of the image block, to obtain the decoding value; and the obtaining, according to the decoding value and the initial value value, a serial number value of the segmentation manner used for the image block includes: if the decoding value is greater than the initial value value, the serial number value of the segmentation manner used for the image block is equal to a sum of the decoding value and the initial value; or if the decoding value is less than or equal to the initial value value, decoding a sign bit of the encoding information of the segmentation manner of the image block, to obtain sign information, where if the sign information is a first identifier, the serial number value of the segmentation manner used for the image block is equal to a sum of the decoding value and the initial value, or if the sign information is a second identifier, the serial number value of the segmentation manner used for the image block is equal to a difference between the initial value and the decoding value.

With reference to the second aspect and the foregoing implementation manner, in a second possible implementation manner, the obtaining an initial value value corresponding to a size of the image block includes: obtaining, through calculation by using the quantity x of bits that need to be saved, the quantity k of all segmentation manners corresponding to the size of the image block, and the quantity a of bits required for representing all the segmentation manners, the initial value value corresponding to the size of the image block; or querying a preset correspondence between a size of an image block and an initial value value, to obtain the initial value value corresponding to the size of the image block.

With reference to the second aspect and the foregoing implementation manners, in a third possible implementation manner, the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

According to a third aspect, an encoding processing apparatus for an image segmentation manner is provided, including:

an obtaining module, configured to: obtain a size of a to-be-encoded image block and a serial number value of a used segmentation manner in a depth modeling mode DMM1 encoding process; and obtain an initial value value corresponding to the size of the image block, and obtain, through calculation, an absolute value of a difference between the initial value value and the serial number value of the segmentation manner, where value=$k-2^{a-x}$, x is a quantity of bits that need to be saved, k is a quantity of all segmentation manners corresponding to the size of the image block, and a is a quantity of bits required for representing all the segmentation manners; and an encoding module, configured to encode the absolute value, to obtain encoding information of the segmentation manner of the image block.

With reference to the third aspect, in a first possible implementation manner of the third aspect, the encoding module is specifically configured to: if the absolute value is greater than the initial value value, encode the absolute value by using the a-x bits; or if the absolute value is less than or equal to the initial value value, encode the absolute value by using the a-x bits and one sign bit, where if the absolute value is less than the serial number value of the segmentation manner, the sign bit is a first identifier, or if the absolute value is greater than the serial number value of the segmentation manner, the sign bit is a second identifier.

With reference to the third aspect and the foregoing implementation manner, in a second possible implementation manner, the obtaining module is specifically configured to: obtain, through calculation by using the quantity x of bits that need to be saved, the quantity k of all segmentation manners corresponding to the size of the image block, and the quantity a of bits required for representing all the segmentation manners, the initial value value corresponding to the size of the image block; or query a preset correspondence between a size of an image block and an initial value value, to obtain the initial value value corresponding to the size of the image block.

With reference to the third aspect and the foregoing implementation manners, in a third possible implementation manner, the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

According to a fourth aspect, a decoding processing apparatus for an image segmentation manner is provided, including:

a decoding module, configured to decode encoding information of a segmentation manner of an image block in a depth modeling mode DMM1 decoding process, to obtain a decoding value; and an obtaining module, configured to: obtain an initial value value corresponding to a size of the image block, where value=$k-2^{a-x}$, x is a quantity of bits that need to be saved, k is a quantity of all segmentation manners corresponding to the size of the image block, and a is a quantity of bits required for representing all the segmentation manners; and obtain, according to the decoding value and the initial value value, a serial number value of the segmentation manner used for the image block.

With reference to the fourth aspect, in a first possible implementation manner of the fourth aspect, the decoding module is specifically configured to: decode a-x bits of the encoding information of the segmentation manner of the image block, to obtain the decoding value; and the obtaining module is specifically configured to: if the decoding value is greater than the initial value value, the serial number value of the segmentation manner used for the image block is equal to a sum of the decoding value and the initial value; or if the decoding value is less than or equal to the initial value value, decode a sign bit of the encoding information of the segmentation manner of the image block, to obtain sign information, where if the sign information is a first identifier, the serial number value of the segmentation manner used for the image block is equal to a sum of the decoding value and the initial value, or if the sign information is a second identifier, the serial number value of the segmentation manner used for the image block is equal to a difference between the initial value and the decoding value.

With reference to the fourth aspect and the foregoing implementation manner, in a second possible implementation manner, the obtaining module is specifically configured to: obtain, through calculation by using the quantity x of bits that need to be saved, the quantity k of all segmentation manners corresponding to the size of the image block, and the quantity a of bits required for representing all the segmentation manners, the initial value value corresponding to the size of the image block; or query a preset correspondence between a size of an image block and an initial value value, to obtain the initial value value corresponding to the size of the image block.

With reference to the fourth aspect and the foregoing implementation manners, in a third possible implementation manner, the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

In the embodiments of the present invention, when a segmentation manner of an image block is encoded, a serial number value of the segmentation manner, DMM1 index, is not transmitted, but an absolute value Dif of a difference between an initial value value and the serial number value of the segmentation manner, DMM1 index, is transmitted instead. The initial value value may be obtained based on a quantity x of bits that needs to be saved, a quantity k of all segmentation manners corresponding to a size of the image block, and a quantity a of bits required for representing all the segmentation manners. In a decoding process, the initial value value may also be obtained based on a same manner, and the DMM1 index is recovered according to the absolute value Dif obtained by means of decoding and the initial value value. In comparison with a manner in the prior art of encoding a DMM1 index by using fixed-length code, x bits can be saved from a quantity of encoding bits of a transmitted Dif in the embodiments of the present invention, and therefore, encoding efficiency can be improved.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of an embodiment of an encoding processing method for an image segmentation manner according to the present invention;
FIG. 2 is another schematic flowchart of the embodiment shown in FIG. 1;
FIG. 3 is another schematic flowchart of the embodiment shown in FIG. 1;
FIG. 4 is a flowchart of an embodiment of a decoding processing method for an image segmentation manner according to the present invention;
FIG. 5 is a schematic structural diagram of an embodiment of an encoding processing apparatus for an image segmentation manner according to the present invention;
FIG. 6 is a schematic structural diagram of an embodiment of a decoding processing apparatus for an image segmentation manner according to the present invention; and
FIG. 7 is a schematic structural diagram of an embodiment of an encoding/decoding processing apparatus for an image segmentation manner according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the prior art, fixed-length code is used for encoding a segmentation manner of the image block. A case in which a size of an image block is 4x4 is used as an example for description. It is assumed that an encoder needs to use 7 bits ($2^7$=128>87, where it is assumed that a 4x4 DMM1 index has a total of 87 cases) to represent all possible segmentation manners. For example, if a segmentation manner in which a serial number value (DMM1 index) of the segmentation manner is equal to 50 is used, encoding information corresponding to the segmentation manner is 0110010. If a segmentation manner in which a serial number value (DMM1 index) of the segmentation manner is equal to 80 is used, encoding information corresponding to the segmentation manner is 1010000. If a segmentation manner in which a serial number value (DMM1 index) of the segmentation manner is equal to 87 is used, encoding information corresponding to the segmentation manner is 1010111. It can be learned that for 7-bit fixed-length encoding, encoding information of 1011000 to 1111111 is all redundant information.

To reduce encoding information redundancy of a segmentation manner, and improve encoding efficiency, embodiments of the present invention provide corresponding solutions. Technical solutions of the embodiments of the present invention are described in detail as follows:

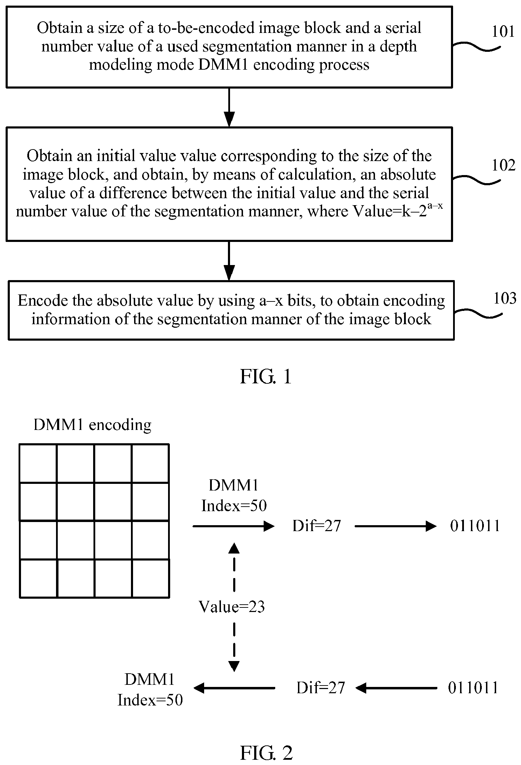

FIG. 1 is a flowchart of Embodiment 1 of an encoding processing method for an image segmentation manner according to the present invention. As shown in FIG. 1, the method in this embodiment may include:

> S101. Obtain a size of a to-be-encoded image block and a serial number value of a used segmentation manner in a depth modeling mode DMM1 encoding process.

Specifically, when encoding an image block by using a DMM1, an encoder needs to encode a segmentation manner of the image block, so that a decoder can learn the specific segmentation manner of the image block, to perform decoding. Different image block sizes are corresponding to different quantities of possible segmentation manners. For example, for a case in which a size of an image block is 4x4, it is assumed that a quantity of all segmentation manners of the image block is 87; for a case in which a size of an image block is 8x8, it is assumed that a quantity of all segmentation manners of the image block is 767; for a case in which a size of an image block is 16×16, it is assumed that a quantity of all segmentation manners of the image block is 1351; for a case in which a size of an image block is 32x32, it is assumed that a quantity of all segmentation manners of the image block is 1504.

The encoder may obtain the size of the image block and the serial number value of the used segmentation manner in the DMM1 encoding process, where for example, the DMM1 index is 50.

S102. Obtain an initial value value corresponding to the size of the image block, and obtain, through calculation, an absolute value of a difference between the initial value value and the serial number value of the segmentation manner, where value=$k-2^{a-x}$, x is a quantity of bits that need to be saved, k is a quantity of all segmentation manners corresponding to the size of the image block, and a is a quantity of bits required for representing all the segmentation manners.

Specifically, the encoder may obtain the initial value value corresponding to the size of the image block. The initial value value may be obtained by using the following formula:

$$\text{value}=k-2^{a-x},$$

where

x is the quantity of bits that need to be saved, k is the quantity of all segmentation manners corresponding to the size of the image block, and a is the quantity of bits required for representing all the segmentation manners.

It can be learned that the initial value value is a value that has a correspondence with the size of the image block. For a 4x4 image block, it is assumed that a quantity k of all segmentation manners is 87 and a quantity of bits required for representing all the segmentation manners is 7, and if a quantity x of bits that need to be saved is 1, value=$87-2^{7-1}$=23. For an 8x8 image block, it is assumed that a quantity k of all segmentation manners is 767 and a quantity of bits required for representing all the segmentation manners is 10, and if a quantity x of bits that need to be saved is 1, value=$767-2^{10-1}$=255. For a 16×16 image block, it is assumed that a quantity k of all segmentation manners is 1351 and a quantity of bits required for representing all the segmentation manners is 11, and if a quantity x of bits that need to be saved is 1, value=$1351-2^{11-1}$=327. For a 32x32 image block, it is assumed that a quantity k of all segmentation manners is 1504 and a quantity of bits required for representing all the segmentation manners is 11, and if a quantity x of bits that need to be saved is 1, value=$1504-2^{11-1}$=480.

In specific implementation, the initial value value may be dynamically calculated in the encoding process or may be preconfigured.

For a dynamic calculation manner, the encoder may obtain, through calculation by using the quantity x of bits that need to be saved, the quantity k of all segmentation manners corresponding to the size of the image block, and the quantity a of bits required for representing all the segmentation manners, the initial value value corresponding to the size of the image block.

For a preconfiguration manner, the encoder may calculate, in advance, an initial value value corresponding to a size of each image block, and store the correspondence between a size of an image block and an initial value value. A specific calculation method is still: obtaining, through calculation by using the quantity x of bits that need to be saved, the quantity k of all segmentation manners corresponding to the size of the image block, and the quantity a of bits required for representing all the segmentation manners, the initial value value corresponding to the size of the image block. In the encoding process, the encoder needs to query only the preset correspondence between a size of an image block and an initial value value, to obtain the initial value value corresponding to the size of the to-be-encoded image block.

Then, the encoder may obtain, through calculation, the absolute value Dif of the difference between the initial value value and the serial number value of the segmentation manner, that is, Dif=|value-DMM1 index|.

For a 4x4 image block, if a serial number value of a segmentation manner, DMM1 index, corresponding to a used segmentation manner is 50, Dif=|23-50|=27.

For an 8x8 image block, if a serial number value of a segmentation manner, DMM1 index, corresponding to a used segmentation manner is 305, Dif=|255-305|=50.

For a $16\times16$ image block, if a serial number value of a segmentation manner, DMM1 index, corresponding to a used segmentation manner is 450, Dif=|327-450|=123.

For a 32x32 image block, if a serial number value of a segmentation manner, DMM1 index, corresponding to a used segmentation manner is 150, Dif=|480-150|=330.

S103. Encode the absolute value by using a-x bits, to obtain encoding information of the segmentation manner of the image block.

After obtaining Dif, the encoder may encode the absolute value by using the a-x bits, to obtain the encoding information of the segmentation manner of the image block.

If the absolute value Dif is greater than the initial value value, the absolute value Dif is encoded by using the a-x bits; or if the absolute value Dif is less than or equal to the initial value value, the absolute value is encoded by using the a-x bits and one sign bit, where if the absolute value Dif is less than the serial number value of the segmentation manner, DMM1 index, the sign bit is a first identifier, or if the absolute value Dif is greater than the serial number value of the segmentation manner, DMM1 index, the sign bit is a second identifier.

FIG. 2 is a schematic flowchart of the embodiment shown in FIG. 1. As shown in FIG. 2, a 4x4 image block is used as an example for description, and it is assumed that a selected DMM1 index=50. Because it is assumed that the 4x4 image block has a total of 87 segmentation manners, a quantity of bits required to be greater than 87 is a=7(27=128>87). If a quantity of bits that need to be saved is 1, an initial value value=87-$2^{7-1}$=23, and a value of Dif is 27. Therefore, Dif(27) may be encoded by using 7-1=6 bits, and obtained encoding information is 011011. In this case, because Dif(27)>value(23), a sign bit does not need to be encoded. The sign bit is used to indicate, when a decoder uses value and Dif to recover a DMM1 index, whether value+Dif is used to obtain the DMM1 index or DMM1 index=value-Dif is used. However, for the encoder, the decoder may decode 6-bit 011011, to obtain Dif=27, and may also learn that value=23 according to the 4x4 image block. In addition, because Dif(27)>value(23), the decoder does not need to decode the sign bit, but may directly calculate DMM1 index=value+Dif=23+27=50, so as to recover a serial number value of a segmentation manner, DMM1 index, of the 4x4 image block. Therefore, in the prior art, code that needs to be used for transmitting the DMM1 index is 0110010, and in this embodiment, code that needs to be used for transmitting Dif is 011011, so that 1 bit can be saved.

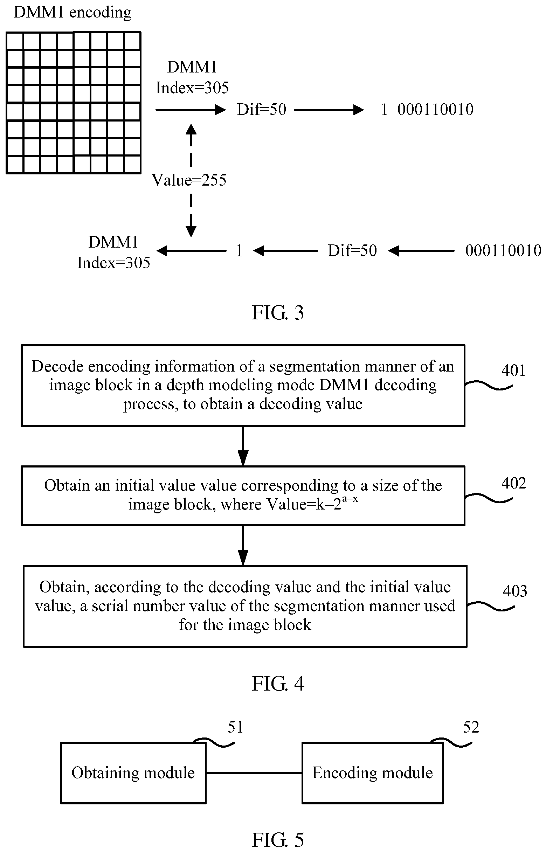

FIG. 3 is another schematic flowchart of the embodiment shown in FIG. 1. As shown in FIG. 3, an 8x8 image block is used as an example for description, and it is assumed that a selected DMM1 index=305. Because it is assumed that the 8x8 image block has a total of 767 segmentation manners, a quantity of bits required for representing the 767 segmentation manners is a=10($2^{10}$=1024>767). If a quantity of bits that need to be saved is 1, an initial value value=767-$2^{10-1}$=255, and a value of Dif is 50. Because Dif(50)<value(255), a sign bit further needs to be encoded. Because Dif(50)<DMM1 index(305), the corresponding sign bit may be set to a first identifier, for example, may be set to 1, so as to instruct a decoder to recover the DMM1 index by using DMM1 index=value+Dif. Therefore, the encoder may encode Dif(50) by using 10-1=9 bits, obtained encoding information is 000110010, and encoding information obtained by encoding the sign bit is 1. During specific transmission, the encoding information of the sign bit may be placed in front of the encoding information of Dif, and correspondingly formed entire encoding information is 1000110010; or the encoding information of the sign bit may be placed behind the encoding information of the Dif, and correspondingly formed entire encoding information is 0001100101; or the sign bit may be placed in another location of encoding information of the entire image block, or even another encoding information in the image block is multiplexed, provided that a function of instructing the decoder can be implemented. However, for the decoder, the decoder may decode 9-bit 000110010, to obtain Dif=50, and may also learn that value=255 according to the 8x8 image block. In addition, because Dif(50)<value(255), the decoder further needs to decode the sign bit, so as to obtain the first identifier such as 1, to further determine that DMM1 index=value+Dif=255+50=305 is used to recover a serial number value of a segmentation manner, DMM1 index, of the 8x8 image block.

An 8x8 image block is still used as an example, and it is assumed that a selected DMM1 index=105. Because it is assumed that the 8x8 image block has a total of 767 segmentation manners, a quantity of bits required for representing the 767 segmentation manners is

a=10($2^{10}$=1024>767). If a quantity of bits that need to be saved is 1, an initial value value=767-$2^{10-1}$=255, and a value of Dif is 150. Because Dif(150)<value(255), a sign bit further needs to be encoded. Because Dif(150)>DMM1 index(105), the corresponding sign bit may be set to a second identifier, for example, may be set to 1, so as to instruct a decoder to recover the DMM1 index by using DMM1 index=value-Dif. Therefore, the encoder may encode Dif(150) by using 10-1=9 bits, obtained encoding information is 010010110, and encoding information obtained by encoding the sign bit is 1. However, for the decoder, the decoder may decode 9-bit 010010110, to obtain Dif=150, and may also learn that value=255 according to the 8x8 image block. In addition, because Dif(150)<value(255), the decoder further needs to decode the sign bit, so as to obtain the second identifier such as 1, to further determine that DMM1 index=value-Dif=255-150=105 is used to recover a serial number value of a segmentation manner, DMM1 index, of the 8x8 image block.

In conclusion, in the method in this embodiment, when a segmentation manner of an image block is encoded, a serial number value of the segmentation manner, DMM1 index, is not transmitted, but an absolute value Dif of a difference between an initial value value and the serial number value of the segmentation manner, DMM1 index, is transmitted instead. The initial value value may be obtained based on a quantity x of bits that needs to be saved, a quantity k of all segmentation manners corresponding to a size of the image block, and a quantity a of bits required for representing all the segmentation manners. In a decoding process, the initial value value may also be obtained based on a same manner, and the DMM1 index is recovered according to the absolute value Dif obtained by means of decoding and the initial value value. In comparison with a manner in the prior art of encoding a DMM1 index by using fixed-length code, x bits can be saved from a quantity of encoding bits of a transmitted Dif in this embodiment, and therefore, encoding efficiency can be improved.

FIG. 4 is a decoding processing method for an image segmentation manner according to the present invention. As shown in FIG. 4, the method in this embodiment may include:

S401. Decode encoding information of a segmentation manner of an image block in a depth modeling mode DMM1 decoding process, to obtain a decoding value.

S402. Obtain an initial value value corresponding to a size of the image block, where value=k-$2^{a-x}$, x is a quantity of bits that need to be saved, k is a quantity of all segmentation manners corresponding to the size of the image block, and a is a quantity of bits required for representing all the segmentation manners.

S403. Obtain, according to the decoding value and the initial value value, a serial number value of the segmentation manner used for the image block.

Further, S401 may be specifically:

decoding a-x bits of the encoding information of the segmentation manner of the image block, to obtain the decoding value.

Accordingly, S403 may be specifically:

if the decoding value is greater than the initial value value, the serial number value of the segmentation manner used for the image block is equal to a sum of the decoding value and the initial value; or if the decoding value is less than or equal to the initial value value, decoding a sign bit of the encoding information of the segmentation manner of the image block, to obtain sign information, where if the sign information is a first identifier, the serial number value of the segmentation manner used for the image block is equal to a sum of the decoding value and the initial value, or if the sign information is a second identifier, the serial number value of the segmentation manner used for the image block is equal to a difference between the initial value and the decoding value.

Further, in S402, the obtaining an initial value value corresponding to a size of the image block may be specifically:

obtaining, through calculation by using the quantity x of bits that need to be saved, the quantity k of all segmentation manners corresponding to the size of the image block, and the quantity a of bits required for representing all the segmentation manners, the initial value value corresponding to the size of the image block; or querying a preset correspondence between a size of an image block and an initial value value, to obtain the initial value value corresponding to the size of the image block.

In this embodiment, the size of the image block is 4x4, and it is assumed that the quantity k of all segmentation manners is 87, the quantity of bits required for representing all the segmentation manners is 7, and the quantity x of bits that need to be saved is 1; or the size of the image block is 8x8, and it is assumed that the quantity k of all segmentation manners is 767, the quantity of bits required for representing all the segmentation manners is 10, and the quantity x of bits that need to be saved is 1; or the size of the image block is 16×16, and it is assumed that the quantity k of all segmentation manners is 1351, the quantity of bits required for representing all the segmentation manners is 11, and the quantity x of bits that need to be saved is 1; or the size of the image block is 32x32, and it is assumed that the quantity k of all segmentation manners is 1504, the quantity of bits required for representing all the segmentation manners is 11, and the quantity x of bits that need to be saved is 1.

This embodiment is a decoding embodiment corresponding to the encoding method embodiment shown in FIG. 1, and an implementation process is corresponding to an implementation process shown in FIG. 1. In addition, reference may be further made to descriptions of two examples shown in FIG. 2 or FIG. 3, an implementation principle thereof is similar, and details are not described herein.

FIG. 5 is a schematic structural diagram of an embodiment of an encoding processing apparatus for an image segmentation manner according to the present invention. As shown in FIG. 3, the apparatus in this embodiment includes an obtaining module 51 and an encoding module 52.

The obtaining module 51 is configured to: obtain a size of a to-be-encoded image block and a serial number value of a used segmentation manner in a depth modeling mode DMM1 encoding process; and obtain an initial value value corresponding to the size of the image block, and obtain, through calculation, an absolute value of a difference between the initial value value and the serial number value of the segmentation manner, where value=$k-2^{a-x}$, x is a quantity of bits that need to be saved, k is a quantity of all segmentation manners corresponding to the size of the image block, and a is a quantity of bits required for representing all the segmentation manners.

The encoding module 52 is configured to encode the absolute value by using a-x bits, to obtain encoding information of the segmentation manner of the image block.

Further, the encoding module 52 is specifically configured to:

if the absolute value is greater than the initial value value, encode the absolute value by using the a-x bits; or if the absolute value is less than or equal to the initial value value, encode the absolute value by using the a-x bits and one sign bit, where if the absolute value is less than the serial number value of the segmentation manner, the sign bit is a first identifier, or if the absolute value is greater than the serial number value of the segmentation manner, the sign bit is a second identifier.

Further, the obtaining module 51 is specifically configured to:

obtain, through calculation by using the quantity x of bits that need to be saved, the quantity k of all segmentation manners corresponding to the size of the image block, and the quantity a of bits required for representing all the segmentation manners, the initial value value corresponding to the size of the image block; or query a preset correspondence between a size of an image block and an initial value value, to obtain the initial value value corresponding to the size of the image block.

The size of the image block is 4x4, and it is assumed that the quantity k of all segmentation manners is 87, the quantity of bits required for representing all the segmentation manners is 7, and the quantity x of bits that need to be saved is 1; or

the size of the image block is 8x8, and it is assumed that the quantity k of all segmentation manners is 767, the quantity of bits required for representing all the segmentation manners is 10, and the quantity x of bits that need to be saved is 1; or

the size of the image block is 16×16, and it is assumed that the quantity k of all segmentation manners is 1351, the quantity of bits required for representing all the segmentation manners is 11, and the quantity x of bits that need to be saved is 1; or

the size of the image block is 32x32, and it is assumed that the quantity k of all segmentation manners is 1504, the quantity of bits required for representing all the segmentation manners is 11, and the quantity x of bits that need to be saved is 1.

The apparatus in this embodiment may be configured to implement technical solutions of the method embodiments shown in FIG. 1 to FIG. 3. An implementation principle and a technical effect thereof are similar, and details are not described herein.

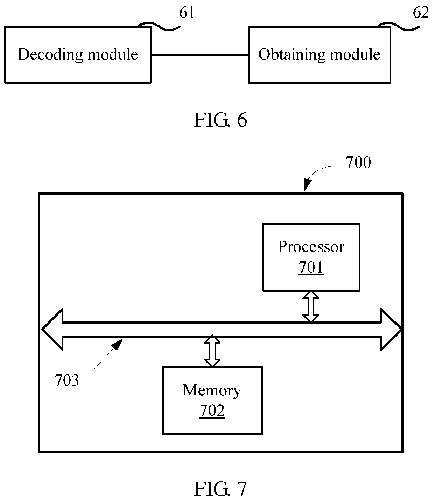

FIG. 6 is a schematic structural diagram of an embodiment of a decoding processing apparatus for an image segmentation manner according to the present invention. As shown in FIG. 6, the apparatus in this embodiment includes a decoding module 61 and an obtaining module 62.

The decoding module 61 is configured to decode encoding information of a segmentation manner of an image block in a depth modeling mode DMM1 decoding process, to obtain a decoding value.

The obtaining module 62 is configured to: obtain an initial value value corresponding to a size of the image block, where value=$k-2^{a-x}$, x is a quantity of bits that need to be saved, k is a quantity of all segmentation manners corresponding to the size of the image block, and a is a quantity of bits required for representing all the segmentation manners; and obtain, according to the decoding value and the initial value value, a serial number value of the segmentation manner used for the image block.

Further, the decoding module 61 is specifically configured to:

decode a-x bits of the encoding information of the segmentation manner of the image block, to obtain the decoding value; and
accordingly, the obtaining module 62 is specifically configured to:

if the decoding value is greater than the initial value value, the serial number value of the segmentation manner used for the image block is equal to a sum of the decoding value and the initial value; or if the decoding value is less than or equal to the initial value value, decode a sign bit of the encoding information of the segmentation manner of the image block, to obtain sign information, where if the sign information is a first identifier, the serial number value of the segmentation manner used for the image block is equal to a sum of the decoding value and the initial value, or if the sign information is a second identifier, the serial number value of the segmentation manner used for the image block is equal to a difference between the initial value and the decoding value.

Further, the obtaining module 62 is specifically configured to:

obtain, through calculation by using the quantity x of bits that need to be saved, the quantity k of all segmentation manners corresponding to the size of the image block, and the quantity a of bits required for representing all the segmentation manners, the initial value value corresponding to the size of the image block; or query a preset correspondence between a size of an image block and an initial value value, to obtain the initial value value corresponding to the size of the image block.

The size of the image block is 4x4, and it is assumed that the quantity of all segmentation manners is 87, the quantity of bits required for representing all the segmentation manners is 7, and the quantity x of bits that need to be saved is 1; or
the size of the image block is 8x8, and it is assumed that the quantity of all segmentation manners is 767, the quantity of bits required for representing all the segmentation manners is 10, and the quantity x of bits that need to be saved is 1; or
the size of the image block is $16 \times 16$, and it is assumed that the quantity of all segmentation manners is 1351, the quantity of bits required for representing all the segmentation manners is 11, and the quantity x of bits that need to be saved is 1; or
the size of the image block is 32x32, and it is assumed that the quantity of all segmentation manners is 1504, the quantity of bits required for representing all the segmentation manners is 11, and the quantity x of bits that need to be saved is 1.

The apparatus in this embodiment is configured to implement a technical solution of the method embodiment shown in FIG. 4. An implementation principle and a technical effect thereof are similar, and details are not described herein.

FIG. 7 is a schematic structural diagram of an embodiment of an encoding/decoding processing apparatus for an image segmentation manner according to the present invention. In another apparatus embodiment of the present invention, as shown in FIG. 7, the foregoing encoding processing apparatus 700 specifically includes a processor 701 and a memory 702. The processor may be a general purpose processor (such as a CPU), or may be a dedicated graphics processing unit (GPU). The processor is connected to the memory by using a bus 703. The memory stores an instruction for implementing an encoding processing method for an image segmentation manner or a decoding processing method for an image segmentation manner. The processor may invoke the instruction in the memory to perform steps of the previously described encoding processing method for an image segmentation manner or the decoding processing method for an image segmentation manner. For a specific image segmentation manner, reference may be made to descriptions of the previous method embodiments, and details are not described herein.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of an ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. An encoding processing method for an image segmentation manner, comprising:

obtaining a size of a to-be-encoded image block and a serial number value of a used segmentation manner in a depth modeling mode DMM1 encoding process;
obtaining an initial value value corresponding to the size of the image block, and obtaining, through calculation, an absolute value of a difference between the initial value value and the serial number value of the segmentation manner, wherein value=k-$2^{a-x}$, x is a quantity of bits that need to be saved, k is a quantity of all segmentation manners corresponding to the size of the image block, and a is a quantity of bits required for representing all the segmentation manners; and

encoding the absolute value by using a-x bits, to obtain encoding information of the segmentation manner of the image block.

**2.** The method according to claim 1, wherein the encoding the absolute value by using a-x bits comprises:

if the absolute value is greater than the initial value value, encoding the absolute value by using the a-x bits; or if the absolute value is less than or equal to the initial value value, encoding the absolute value by using the a-x bits and one sign bit, wherein if the absolute value is less than the serial number value of the segmentation manner, the sign bit is a first identifier, or if the absolute value is greater than the serial number value of the segmentation manner, the sign bit is a second identifier.

**3.** The method according to claim 1 or 2, wherein the obtaining an initial value value corresponding to the size of the image block comprises:

obtaining, through calculation by using the quantity x of bits that need to be saved, the quantity k of all segmentation manners corresponding to the size of the image block, and the quantity a of bits required for representing all the segmentation manners, the initial value value corresponding to the size of the image block; or querying a preset correspondence between a size of an image block and an initial value value, to obtain the initial value value corresponding to the size of the image block.

**4.** The method according to any one of claims 1 to 3, wherein the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

**5.** A decoding processing method for an image segmentation manner, comprising:

decoding encoding information of a segmentation manner of an image block in a depth modeling mode DMM1 decoding process, to obtain a decoding value; obtaining an initial value value corresponding to a size of the image block, wherein value=$k-2^{a-x}$, x is a quantity of bits that need to be saved, k is a quantity of all segmentation manners corresponding to the size of the image block, and a is a quantity of bits required for representing all the segmentation manners; and obtaining, according to the decoding value and the initial value value, a serial number value of the segmentation manner used for the image block.

**6.** The method according to claim 5, wherein the decoding encoding information of a segmentation manner of an image block, to obtain a decoding value comprises:

decoding a-x bits of the encoding information of the segmentation manner of the image block, to obtain the decoding value; and the obtaining, according to the decoding value and the initial value value, a serial number value of the segmentation manner used for the image block comprises:

if the decoding value is greater than the initial value value, the serial number value of the segmentation manner used for the image block is equal to a sum of the decoding value and the initial value; or if the decoding value is less than or equal to the initial value value, decoding a sign bit of the encoding information of the segmentation manner of the image block, to obtain sign information, wherein if the sign information is a first identifier, the serial number value of the segmentation manner used for the image block is equal to a sum of the decoding value and the initial value, or if the sign information is a second identifier, the serial number value of the segmentation manner used for the image block is equal to a difference between the initial value and the decoding value.

**7.** The method according to claim 5 or 6, wherein the obtaining an initial value value corresponding to a size of the image block comprises:

obtaining, through calculation by using the quantity x of bits that need to be saved, the quantity k of all segmentation manners corresponding to the size of the image block, and the quantity a of bits required for representing all the segmentation manners, the initial value value corresponding to the size of the image block; or querying a preset correspondence between a size of an image block and an initial value value, to obtain the initial value value corresponding to the size of the image block.

**8.** The method according to any one of claims 5 to 7, wherein the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

**9.** An encoding processing apparatus for an image segmentation manner, comprising:

an obtaining module, configured to: obtain a size of a to-be-encoded image block and a serial number value of a used segmentation manner in a depth modeling mode DMM1 encoding process; and obtain an initial value value corresponding to the size of the image block, and obtain, through calculation, an absolute value of a difference between the initial value value and the serial number value of the segmentation manner, wherein value=k-$2^{a-x}$, x is a quantity of bits that need to be saved, k is a quantity of all segmentation manners corresponding to the size of the image block, and a is a quantity of bits required for representing all the segmentation manners; and
an encoding module, configured to encode the absolute value by using a-x bits, to obtain encoding information of the segmentation manner of the image block.

**10.** The apparatus according to claim 9, wherein the encoding module is specifically configured to:

if the absolute value is greater than the initial value value, encode the absolute value by using the a-x bits; or if the absolute value is less than or equal to the initial value value, encode the absolute value by using the a-x bits and one sign bit, wherein if the absolute value is less than the serial number value of the segmentation manner, the sign bit is a first identifier, or if the absolute value is greater than the serial number value of the segmentation manner, the sign bit is a second identifier.

**11.** The apparatus according to claim 9 or 10, wherein the obtaining module is specifically configured to:

obtain, through calculation by using the quantity x of bits that need to be saved, the quantity k of all segmentation manners corresponding to the size of the image block, and the quantity a of bits required for representing all the segmentation manners, the initial value value corresponding to the size of the image block; or query a preset correspondence between a size of an image block and an initial value value, to obtain the initial value value corresponding to the size of the image block.

**12.** The apparatus according to any one of claims 9 to 11, wherein the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

**13.** A decoding processing apparatus for an image segmentation manner, comprising:

a decoding module, configured to decode encoding information of a segmentation manner of an image block in a depth modeling mode DMM1 decoding process, to obtain a decoding value; and
an obtaining module, configured to: obtain an initial value value corresponding to a size of the image block, wherein value=k-$2^{a-x}$, x is a quantity of bits that need to be saved, k is a quantity of all segmentation manners corresponding to the size of the image block, and a is a quantity of bits required for representing all the segmentation manners; and obtain, according to the decoding value and the initial value value, a serial number value of the segmentation manner used for the image block.

**14.** The apparatus according to claim 13, wherein the decoding module is specifically configured to:

decode a-x bits of the encoding information of the segmentation manner of the image block, to obtain the decoding value; and
the obtaining module is specifically configured to:

if the decoding value is greater than the initial value value, the serial number value of the segmentation manner used for the image block is equal to a sum of the decoding value and the initial value; or if the decoding value is less than or equal to the initial value value, decode a sign bit of the encoding information of the segmentation manner of the image block, to obtain sign information, wherein if the sign information is a first identifier, the serial number value of the segmentation manner used for the image block is equal to a sum of the decoding value and the initial value, or if the sign information is a second identifier, the serial number value of the segmentation manner used for the image block is equal to a difference between the initial value and the decoding value.

15. The apparatus according to claim 13 or 14, wherein the obtaining module is specifically configured to:

obtain, through calculation by using the quantity x of bits that need to be saved, the quantity k of all segmentation manners corresponding to the size of the image block, and the quantity a of bits required for representing all the segmentation manners, the initial value value corresponding to the size of the image block; or query a preset correspondence between a size of an image block and an initial value value, to obtain the initial value value corresponding to the size of the image block.

16. The apparatus according to any one of claims 13 to 15, wherein the size of the image block is 4x4, and the quantity x of bits that need to be saved is 1; or the size of the image block is 8x8, and the quantity x of bits that need to be saved is 1; or the size of the image block is $16 \times 16$, and the quantity x of bits that need to be saved is 1; or the size of the image block is 32x32, and the quantity x of bits that need to be saved is 1.

Obtain a size of a to-be-encoded image block and a serial number value of a used segmentation manner in a depth modeling mode DMM1 encoding process

101

Obtain an initial value value corresponding to the size of the image block, and obtain, by means of calculation, an absolute value of a difference between the initial value and the serial number value of the segmentation manner, where Value=$k–2^{a–x}$

102

Encode the absolute value by using a–x bits, to obtain encoding information of the segmentation manner of the image block

103

FIG. 1

DMM1 encoding

DMM1
Index=50 $\longrightarrow$ Dif=27 $\longrightarrow$ 011011

Value=23

DMM1
Index=50 $\longleftarrow$ Dif=27 $\longleftarrow$ 011011

FIG. 2

DMM1 encoding

DMM1
Index=305

——————▶ Dif=50 ——————▶ 1 000110010

Value=255

DMM1
Index=305 ◀—————— 1 ◀————— Dif=50 ◀————— 000110010

**FIG. 3**

| |
|---|
| Decode encoding information of a segmentation manner of an image block in a depth modeling mode DMM1 decoding process, to obtain a decoding value |

401

| |
|---|
| Obtain an initial value value corresponding to a size of the image block, where Value=k–$2^{a-x}$ |

402

| |
|---|
| Obtain, according to the decoding value and the initial value value, a serial number value of the segmentation manner used for the image block |

403

**FIG. 4**

51    52

| Obtaining module |———| Encoding module |

**FIG. 5**

61

62

| Decoding module | Obtaining module |
|---|---|

FIG. 6

700

Processor
701

703

Memory
702

FIG. 7

# INTERNATIONAL SEARCH REPORT

| International application No. |
|---|
| PCT/CN2015/074487 |

### A. CLASSIFICATION OF SUBJECT MATTER

H04N 13/00 (2006.01) i; H04N 19/597 (2014.01) i; H04N 19/176 (2014.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; CNKI: HUAWEI, CHENXU, image, divide, segment, partition, block, code, decode, depth, model, DMM, cuniform, redundancy, efficiency, bit, reduce, decrease, serial number, absolute value, difference    VEN; DWPI: image, cod+, decod+, DMM, HEVC, depth modeling modes, segment, cuniform, redundance, bit, reduce, number, absolute, value, difference, efficiency

### C. DOCUMENTS CONSIDERED TO BE RELEVANT

| Category* | Citation of document, with indication, where appropriate, of the relevant passages | Relevant to claim No. |
|---|---|---|
| PX | CN 103826115 A (HUAWEI TECHNOLOGIES CO., LTD.) 28 May 2014 (28.05.2014) claims 1 to 16 | 1-16 |
| A | CN 103237216 A (HUAWEI TECHNOLOGIES CO., LTD.) 07 August 2013 (07.08.2013) the whole document | 1-16 |
| A | CN 102484716 A (TOSHIBA KK.) 30 May 2012 (30.05.2012) the whole document | 1-16 |
| A | WO 2014005248 A1 (QUALCOMM INC.) 09 January 2014 (09.01.2014) the whole document | 1-16 |
| A | WO 2014036848 A1 (LG ELECTRONICS CHINA RES. & DEV. et al.) 13 March 2014 (13.03.2014) the whole document | 1-16 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 June 2015 | 26 June 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YANG, Hao<br><br>Telephone No. (86-10) 62411449 |

Form PCT/ISA /210 (second sheet) (July 2009)

**INTERNATIONAL SEARCH REPORT**
Information on patent family members

| | | International application No. |
| --- | --- | --- |
| | | PCT/CN2015/074487 |

| Patent Documents referred in the Report | Publication Date | Patent Family | Publication Date |
| --- | --- | --- | --- |
| CN 103826115 A | 28 May 2014 | None | |
| CN 103237216 A | 07 August 2013 | WO 2014166434 A1 | 16 October 2014 |
| CN 102484716 A | 30 May 2012 | WO 2011121843 A1 | 06 October 2011 |
| | | KR 20120043014 A | 03 May 2012 |
| | | JPWO 2011121843 S | 04 July 2013 |
| WO 2014005248 A1 | 09 January 2014 | CN 104396250 A | 04 March 2015 |
| WO 2014036848 A1 | 13 March 2014 | CN 103686165 A | 26 March 2014 |

Form PCT/ISA /210 (patent family annex) (July 2009)